# EUROPÄISCHE PATENTANMELDUNG

(11) **EP 2 199 351 A1**
(43) Veröffentlichungstag der Anmeldung: **23.06.2010**
(21) Anmeldenummer: 08172420.5
(22) Anmeldetag: 19.12.2008
(51) Int. Cl.: C09D 143/04, C08K 3/22, C08K 13/02

(54) **Flüssigfolie auf Basis von silanterminierten Polymeren**

(71) Anmelder: Sika Technology AG, 6340 Baar (CH)
(72) Erfinder: Pusel, Thomas, 71696, Möglingen (DE); Teysseire, Raphael, 8105, Watt (CH); Tenisch, Willi, 6010, Kriens (CH); Strauss, Susanne, 70597, Stuttgart (DE); Jucker, Barbara, 8057, Zürich (CH); Zilg, Carsten, 70825, Korntal-Münchingen (DE)
(74) Vertreter: Sika Patent Attorneys

(57) **Zusammenfassung**

Die vorliegende Erfindung betrifft eine Zusammensetzung umfassend mindestens ein silanfunktionelles Polymer P und 20 bis 60 Gew.-% Aluminiumhydroxid oder Magnesiumhydroxid oder deren Mischung, wobei die Zusammensetzung eine Viskosität von 500 bis 20'000 mPa·s gemessen nach DIN 53018 bei einer Temperatur von 20 °C aufweist.

Eine derartige Zusammensetzung eignet sich insbesondere als Flüssigfolie und weist sehr gute Brandeigenschaften auf, das heisst, sie ist schwer zu entzünden und selbstverlöschend.

## Beschreibung

### Technisches Gebiet

Die vorliegende Erfindung betrifft das Gebiet der flüssig applizierbaren Folien zur Bauwerksabdichtung.

### Stand der Technik

Flüssig applizierbare Folien zur Bauwerksabdichtung auf der Basis von Polyurethanen oder Acrylatdispersionen sind bekannt.

Zusammensetzungen für Flüssigfolien auf Polyurethanbasis weisen den Nachteil auf, dass sie organische Lösungsmittel und Isocyanate enthalten und somit aus ökologischen und toxikologischen Gründen nicht für jede Anwendung geeignet sind.

Weiterhin benötigen Flüssigfolien auf Polyurethanbasis oft eine umfassende Substratvorbereitung um ausreichende Haftung zu erzielen. Dabei kommen vor allem Haftvermittlerzusammensetzung, so genannte Primer, zum Einsatz. Aus unterschiedlichen Gründen kann es notwendig oder von bedeutendem Vorteil sein, bei der Applikation einer Flüssigfolie auf Haftvermittlerzusammensetzungen zu verzichten. So bringt beispielsweise die primerlose Applikation der Folie neben einem Kostenvorteil, auch einen Zeitvorteil, da auf die Applikation und die Ablüftung der Haftvermittlerzusammensetzung verzichtet werden kann. Weiterhin weist die primerlose Applikation der Folie auch ökologische Vorteile auf, da Primer sehr oft grosse Mengen an flüchtigen organischen Lösungsmitteln, so genannten VOCs (Volatile Organic Compounds), enthalten.

Weitere Nachteile von Flüssigfolien auf Polyurethanbasis sind, dass die Polyurethanzusammensetzungen oftmals relativ kurze Lagerstabilitäten aufweisen und dass sie für die Applikation an vertikalen Flächen modifiziert werden müssen um ein Ablaufen der Zusammensetzung zu verhindern.

Demgegenüber sind Zusammensetzungen für Flüssigfolien auf Basis von Acrylat-Dispersionen frei von organischen Lösungsmitteln und weisen eine relativ hohe Lagerstabilität von bis zu 12 Monaten auf. Sie weisen jedoch den Nachteil auf, dass sie deutlich weniger UV- und wetterbeständig sind und wegen mangelnder Haftung nur auf einer beschränkten Anzahl von Substraten anwendbar sind.

Weiterhin weisen bekannte Flüssigfolien Nachteile bezüglich ihrer Brandeigenschaften auf, was insbesondere bei der Abdichtung von bewohnten Gebäuden aus sicherheitstechnischen Gründen problematisch ist.

### Darstellung der Erfindung

Aufgabe der vorliegenden Erfindung ist es daher, eine Zusammensetzung zur Herstellung von Flüssigfolien zur Verfügung zu stellen, welche die Nachteile des Stands der Technik überwindet, aus ökologischer und toxikologischer Sicht eine Verbesserung darstellt und zudem verbesserte Eigenschaften im Brandverhalten aufweist.

Überraschenderweise wurde nun gefunden, dass Zusammensetzungen gemäss Anspruch 1 diese Aufgabe lösen.

Durch die Kombination von Aluminiumhydroxid und/oder Magnesiumhydroxid mit einem silanterminierten Polymer können Zusammensetzungen hergestellt werden, welche sich in flüssigem Zustand als Folie applizieren lassen, welche weder flüchtige organische Lösungsmittel noch Isocyanate aufweisen und welche sehr gute Eigenschaften in ihrem Brandverhalten zeigen, wodurch sie die Sicherheit für Gebäude und ihre Benutzer erhöhen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Zusammensetzung umfassend
a) mindestens ein silanfunktionelles Polymer **P**; und
b) 20 bis 60 Gew.-% Aluminiumhydroxid oder Magnesiumhydroxid oder deren Mischung;
wobei die Zusammensetzung eine Viskosität von 500 bis 20'000 mPa·s gemessen nach DIN 53018 bei einer Temperatur von 20 °C aufweist.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter der "Molekulargewicht" versteht man im vorliegenden Dokument stets das Molekulargewichtsmittel Mₙ (Zahlenmittel).

Die erfindungsgemässe Zusammensetzung enthält mindestens ein silanfunktionelles Polymer **P**, welches insbesondere Endgruppen der Formel (II) aufweist.

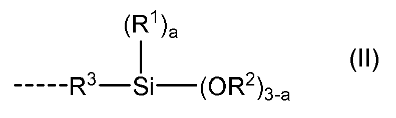

Dabei steht der Rest R¹ für einen linearen oder verzweigten, einwertigen Kohlenwasserstoffrest mit 1 bis 8 C-Atomen, insbesondere für eine Methyl- oder für eine Ethylgruppe.

Der Rest R² steht für einen Acylrest oder für einen linearen oder verzweigten, einwertigen Kohlenwasserstoffrest mit 1 bis 5 C-Atomen, insbesondere für eine Methyl- oder für eine Ethyl- oder für eine Isopropylgruppe.

Der Rest R³ steht für einen linearen oder verzweigten, zweiwertigen Kohlenwasserstoffrest mit 1 bis 12 C-Atomen steht, welcher gegebenenfalls cyclische und/oder aromatische Anteile, und gegebenenfalls ein oder mehrere Heteroatome, insbesondere ein oder mehrere Stickstoffatome, aufweist.

Der Index a steht für einen Wert von 0 oder 1 oder 2, insbesondere für einen Wert von 0.

Innerhalb einer Silangruppe der Formel (II) stehen R¹ und R² jeweils unabhängig voneinander für die beschriebenen Reste. So sind beispielsweise auch Verbindungen mit Endgruppen der Formel (II) möglich, welche Ethoxydimethoxysilan-Endgruppen (R² = Methyl, R² = Methyl, R² = Ethyl) sind.

In einer ersten Ausführungsform ist das silanfunktionelle Polymer **P** ein silanfunktionelles Polyurethanpolymer **P1,** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist.

In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Mercaptosilan oder ein Aminosilan, insbesondere ein Aminosilan.

Bevorzugt ist das Aminosilan ein Aminosilan **AS** der Formel (III), 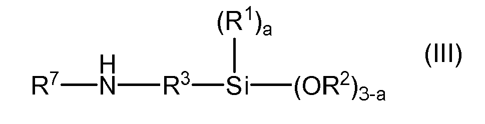 wobei R¹, R², R³ und a bereits vorhergehend beschrieben worden sind, und R⁷ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (IV) steht.

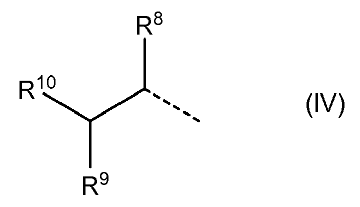

Dabei stehen die Reste R⁸ und R⁹ jeweils unabhängig voneinander für ein Wasserstoffatom oder für einen Rest aus der Gruppe bestehend aus -R¹¹, -COOR¹¹ und -CN.

Der Rest R¹⁰ steht für ein Wasserstoffatom oder für einen Rest aus der Gruppe bestehend aus -CH₂-COOR¹¹, -COOR¹¹, -CONHR¹¹, -CON(R¹¹)₂, -CN, -NO₂, -PO(OR¹¹)₂, -SO₂R¹¹ und -SO₂OR¹¹.

Der Rest R¹¹ steht für einen, gegebenenfalls mindestens ein Heteroatom aufweisenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, Acryl- und Methacrylsäureestern, Acryl- oder Methacrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane **AS** besonders geeignet sind sekundäre Aminosilane, insbesondere Aminosilane **AS**, bei denen R⁷ in Formel (III) verschieden von H ist. Bevorzugt sind die Michael-artigen Addukte, insbesondere N-(3-Trimethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche aliphatische, cycloaliphatische oder aromatische Polyisocyanate, insbesondere Diisocyanate, verwendet werden.

Beispielsweise sind das Diisocyanate, deren Isocyanatgruppen an jeweils ein aliphatisches, cycloaliphatisches oder arylaliphatisches C-Atom gebunden sind, auch "aliphatische Diisocyanate" genannt, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethylcyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat (TDI), 4,4'-, 2,4'-und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Beispielsweise sind geeignete silanfunktionelle Polymere **P1** kommerziell erhältlich unter den Handelsnamen Polymer ST, beispielsweise Polymer ST50, von der Firma Hanse Chemie AG, Deutschland, sowie unter dem Handelsnamen Desmoseal^{®} von der Firma Bayer MaterialScience AG, Deutschland.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20 °C bis 100 °C, gegebenenfalls unter Mitverwendung von Katalysatoren.

Als Isocyanatosilan **IS** geeignet sind Verbindungen der Formel (V). 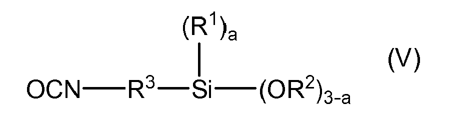 wobei R¹, R², R³ und a bereits vorhergehend beschrieben wurden.

Beispiele für geeignete Isocyanatosilane **IS** der Formel (V) sind Isocyanatomethyltrimethoxysilan, Isocyanatomethyldimethoxymethylsilan 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.

Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen **IS** der Formel (V). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.

Beispielsweise sind geeignete silanfunktionelle Polymere **P2** kommerziell erhältlich unter den Handelsnamen SPUR+^{®} 1010LM, 1015LM und 1050MM von der Firma Momentive Performance Materials Inc., USA, sowie unter den Handelsnamen Geniosil^{®} STP-E15, STP-10 und STP-E35 von der Firma Wacker Chemie AG, Deutschland.

In einer dritten Ausführungsform ist das silanfunktionelle Polymer **P** ein silanfunktionelles Polymer **P3,** welches erhältlich ist durch eine Hydrosilylierungsreaktion von Polymeren, mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren Offenbarung hiermit eingeschlossen ist.

Beispielsweise sind geeignete silanfunktionelle Polymere **P3** kommerziell erhältlich unter den Handelsnamen MS-Polymer^{®} S203(H), S303(H), S227, S810, MA903 und S943, Silyl^{®} SAX220, SAX350, SAX400 und SAX725, Silyl^{®} SAT350 und SAT400, sowie XMAP^{®} SA100S und SA310S von der Firma Kaneka Corp., Japan, sowie unter den Handelsnamen Excestar^{®} S241 0, S2420, S3430, S3630, W2450 und MSX931 von der Firma Asahi Glass Co, Ltd., Japan.

Bevorzugt handelt es sich beim silanfunktionellen Polymer **P** um ein silanfunktionelles Polymer **P1** oder **P2.** Diese weisen gegenüber dem silanfunktionellen Polymer **P3** den Vorteil auf, dass sie einfacher und somit kostengünstiger in der Herstellung sind.

Üblicherweise ist das silanfunktionelle Polymer **P** in einer Menge von 10 bis 80 Gew.-%, insbesondere in einer Menge von 15 bis 70 Gew.-%, bevorzugt 20 bis 40 Gew.-%, bezogen auf die gesamte Zusammensetzung, vorhanden.

Weiterhin umfasst die erfindungsgemässe Zusammensetzung 20 bis 60 Gew.-%, insbesondere 30 bis 55 Gew.-%, bevorzugt 40 bis 50 Gew.-%, Aluminiumhydroxid oder Magnesiumhydroxid oder deren Mischung. Meist bevorzugt umfasst die erfindungsgemässe Zusammensetzung Aluminiumhydroxid.

Das Aluminium- und/oder das Magnesiumhydroxid liegen insbesondere in Pulverform vor, wobei Pulver mit Korngrössen von 0.1 bis 100 µm bevorzugt sind.

Neben dem Aluminium- und/oder Magnesiumhydroxid kann die erfindungsgemässe Zusammensetzung zusätzlich weitere Füllstoffe enthalten, welche sowohl die rheologischen Eigenschaften der nicht ausgehärteten Zusammensetzung als auch die mechanischen Eigenschaften und die Oberflächenbeschaffenheit der ausgehärteten Zusammensetzung beeinflussen. Geeignete weitere Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Kieselsäuren, insbesondere hochdisperse Kieselsäuren aus Pyrolyseprozessen, PVC-Pulver oder Hohlkugeln. Bevorzugt enthält die erfindungsgemässe Zusammensetzung als weiteren Füllstoff beschichtete Calciumcarbonate.

Eine geeignete Menge an zusätzlichem Füllstoff liegt beispielsweise im Bereich von 1 bis 15 Gew.-%, insbesondere 2 bis 10 Gew.-%, bevorzugt 3 bis 8 Gew.-%, bezogen auf die gesamte Zusammensetzung.

Vorzugsweise enthält die Zusammensetzung weiterhin eine Phosphorverbindung der Formel (I) 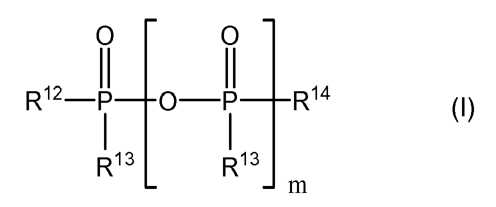 wobei entweder
der Rest R¹² für einen Rest der Formel -OR¹⁵ steht;
der Rest R¹⁵ für einen linearen oder verzweigten, einwertigen Kohlenwasserstoffrest mit 1 bis 18 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist;
der Reste R¹³ für ein Wasserstoffatom oder für einen Rest R¹⁴ steht;
der Rest R¹⁴ für einen Rest der Formel -OR¹⁶ steht;
der Rest R¹⁶ für ein Wasserstoffatom oder für einen linearen oder verzweigten, einwertigen Kohlenwasserstoffrest mit 1 bis 18 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist; und
der Index m für einen Wert von 0, 1 oder 2 steht;
oder wobei
alle Reste R¹², R¹³ und R¹⁴ für Reste der Formel -O⁻ NH₄⁺ stehen; und der Index m für einen Wert von 0 bis 1'000, insbesondere 100 bis 1'000, steht.

Die Phosphorverbindung der Formel (I) weist in der erfindungsgemässen Zusammensetzung sowohl weichmachende als auch flammhemmende Eigenschaften auf. Als flammhemmende Verbindungen wiesen die Phosphorverbindungen der Formel (I) den Vorteil auf, dass sie bei Brand eine Schutzschicht durch Verkohlung auf der Oberfläche bilden.

Die Phosphorverbindungen der Formel (I), bei welchen alle Reste R¹², R¹³ und R¹⁴ für Reste der Formel -O- NH₄⁺ stehen, weisen weiterhin den Vorteil auf, dass sie bei Brand Ammoniak abspalten, welches in gasförmigem Zustand den Sauerstoff verdrängt.

Geeignete Phosphorverbindungen der Formel (I) sind beispielsweise ausgewählt aus der Gruppe bestehend aus Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)phosphat, isopropyliertes Triphenylphosphat, Mono-, Bis- und Tris(isopropylphenyl)phosphaten unterschiedlichen Isopropylierungsgrades, Resorcinol-bis(diphenylphosphat), Bisphenol-A-bis(diphenylphosphat) und Ammoniumpolyphosphaten.

Bevorzugt stehen in der Phosphorverbindung der Formel (I) die Reste R¹², R¹³ und R¹⁴ jeweils für lineare oder verzweigte, einwertige Kohlenwasserstoffreste mit 1 bis 18, insbesondere mit 4 bis 16, bevorzugt mit 6 bis 12, C-Atomen und m für einen Wert von 0. Derartige Phosphorverbindungen der Formel (I) sind bevorzugt, da sie gegenüber anderen üblichen Flammschutzmitteln keine halogenierten organischen Gruppen aufweisen und somit aus ökologischer und toxikologischer Sicht vorteilhaft sind.

Beispielsweise sind geeignete Phosphorverbindung der Formel (I), kommerziell erhältlich unter den Handelsnamen Disflamoll^{®} DPK, Disflamoll^{®} TOF, Levagard^{®} TEP, Disflamoll^{®} TKP, Disflamoll^{®} TP von der Firma Lanxess AG, Deutschland, unter dem Handelsnamen Santicizer^{®} 148 von der Firma Ferro Corporation, USA, oder unter dem Handelsnamen Antiblaze^{®} PI von der Firma Albemarle Corporation, USA.

Der Anteil an Phosphorverbindung der Formel (I) beträgt vorzugsweise 5 bis 50 Gew.-%, insbesondere 5 bis 30 Gew.-%, bevorzugt 7 bis 15 Gew.-%, der gesamten Zusammensetzung.

Die erfindungsgemässe Zusammensetzung kann weiterhin mindestens ein Organosilan enthalten, dessen organischer Rest mindestens eine funktionelle Gruppe aufweist. Als funktionelle Gruppe eignet sich vorzugsweise mindestens eine Epoxy-, (Meth)acrylatester-, Amin-, Mercapto-, Anhydrid-, Harnstoff- oder Vinyl-Gruppe. Weiterhin eignen sich Addukte der vorgenannten Silane mit primären Aminosilanen.

Insbesondere sind derartige Organosilane Aminosilane, wie sie vorhergehend als Aminosilane **AS** der Formel (III) beschreiben worden sind, Mercaptosilane wie 3-Mercaptopropyltimethoxysilan, Epoxysilane wie 3-Glycidoxypropyltrimethoxysilan oder dergleichen.

Meist bevorzugt ist das Organosilan, dessen organischer Rest mindestens eine funktionelle Gruppe aufweist ein aminofunktionelles Organosilan, auch genannt Aminosilan. Meist bevorzugte Aminosilane sind vorhergehend als Aminosilane **AS** der Formel (III) beschreiben.

Der Anteil an Organosilan, dessen organischer Rest mindestens eine funktionelle Gruppe aufweist, beträgt vorzugsweise 0.5 bis 15 Gew.-%, insbesondere 1 bis 10 Gew.-%, bevorzugt 2 bis 5 Gew.-%, der gesamten Zusammensetzung.

Derartige Organosilane, wie sie hier beschrieben sind, können zu verschiedenen Zwecken in der erfindungsgemässen Zusammensetzung eingesetzt werden. Beispielsweise können Organosilane als Reaktivverdünner fungieren, welche bei der Aushärtung der Zusammensetzung, insbesondere durch Reaktion mit den Silangruppen, in die Polymermatrix eingebunden werden. Weiterhin können sie als Kettenabbrecher bei der Vernetzung oder als Trocknungsmittel eingesetzt werden.

Ferner führt der Einsatz solcher Verbindungen zu einer Verbesserung der Haftung der erfindungsgemässen Zusammensetzung auf einer Vielzahl von Substraten, wodurch die Organosilane ebenfalls die Funktion als Haftvermittler aufweisen.

Weiterhin umfasst die erfindungsgemässe Zusammensetzung vorzugsweise mindestens einen Katalysator für die Vernetzung des silanfunktionellen Polymers **P.** Geeignete Katalysatoren sind beispielsweise Metallkatalysatoren in Form von Organozinnverbindungen wie Dibutylzinndilaurat und Dibutylzinndiacetylacetonat, Bismut-organische Verbindungen oder Bismut-Komplexe, Titankatalysatoren und Aminogruppenhaltige Verbindungen, beispielsweise 1,4-Diazabicyclo[2.2.2]octan und 2,2'-Dimorpholinodiethylether, sowie Mischungen der genannten Katalysatoren.

Der Anteil an Katalysator beträgt vorzugsweise 0.001 bis 5 Gew.-%, insbesondere 0.01 bis 3 Gew.-%, bevorzugt 0.01 bis < 0.5 Gew.-%, meist bevorzugt 0.01 bis 0.1 Gew.-%, der gesamten Zusammensetzung.

Die Menge an eingesetztem Katalysator ist dabei unter anderem abhängig vom eingesetzten silanfunktionellen Polymer **P.** Handelt es sich beim silanfunktionellen Polymer **P** um ein silanfunktionelles Polymer **P1** oder **P2,** so wird eine geringere Menge an Katalysator eingesetzt als wenn es sich beim silanfunktionellen Polymer **P** um ein silanfunktionelles Polymer **P3** handelt. Eine geringere Menge an Katalysator hat insbesondere toxikologische Vorteile.

Weiterhin kann die erfindungsgemässe Zusammensetzung zusätzlich weitere Bestandteile enthalten. Beispielsweise sind derartige Bestandteile zusätzliche Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise Glasfasern, Kohlefasern, Metallfasern, Keramikfasern oder Kunststofffasern wie Polyamidfasern oder Polyethylenfasern; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Vernetzer, beispielsweise silanfunktionelle Oligo- und Polymere; weitere Trocknungsmittel, zum Beispiel α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; oberflächenaktive Substanzen wie Netzmittel, Verlaufsmittel, Entlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Es ist vorteilhaft, alle genannten, in der Zusammensetzung gegebenenfalls vorhandenen Bestandteile so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die erfindungsgemässe Zusammensetzung weist in ihrem Ausgangszustand, das heisst vor dem Einsetzen des Vernetzungsvorgangs, eine Viskosität von 500 bis 20'000 mPa·s gemessen nach DIN 53018 bei einer Temperatur von 20 °C auf. Gemessen wird die Viskosität bei Scherraten von 10 s⁻¹ und 100 s⁻¹. Insbesondere weist die erfindungsgemässe Zusammensetzung eine Viskosität von 2'000 bis 15'000 mPa·s, bevorzugt von 4'000 bis 10'000 mPa·s, auf.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Bei der Applikation der beschriebenen Zusammensetzung auf einem Substrat kommen die Silangruppen des Polymers in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus. Dieser Prozess wird auch als Vernetzung bezeichnet.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise von Hand oder über einen Statikmischer, eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur und der Umgebungsfeuchte, bestimmt und verlangsamt sich in der Regel mit dem Fortschreiten der Aushärtung.

Weiterhin umfasst die vorliegende Erfindung die Verwendung einer vorhergehend beschriebenen Zusammensetzung als flüssig applizierbare Folie, insbesondere zur Abdichtung von Bauwerken.

Die Abdichtung eines Bauwerks mit einer erfindungsgemässen Zusammensetzung erfolgt typischerweise gegen meteorologische Einflüsse wie Regen, Schnee, Hagel oder Wind, gegen Umwelteinflüsse wie Kälte, Wärme, Sonnenstrahlung oder Wasser von Überschwemmungen, gegen Einfüsse aus dem Erdreich wie Feuchtigkeit, Pflanzenwachstum oder Durchwurzelung, aber auch gegen Einflüsse, welche durch Mensch und Tier verursacht sind, beispielsweise Feuer. Selbstverständlich schützt eine derartige Abdichtung nicht nur gegen Eindringen unerwünschter oder ungünstiger Effekte in ein Bauwerk, sondern auch gegen Austreten solcher nach aussen. Beispielsweise ist dies der Fall bei Fabrikbauwerken der Industrie, wo Substanzen gehandhabt werden, welche nicht in die Umwelt gelangen dürfen.

Als Bauwerke gelten hier im weiteren Sinn Bauwerke des Hoch- und Tiefbaus, beispielsweise Gebäude, Dächer, Balkone, Terrassen, Wände, Böden, Decken, Mauern, Fundamente, Nasszellen, Aussenplätze, Brücken, Passerellen, Strassen, Pisten, Tunnels, Stollen und dergleichen.

Weiterhin betrifft die vorliegende Erfindung ein Verfahren zur Herstellung einer Folie zur Abdichtung eines Substrats umfassend die Schritte
i) Bereitstellen einer Zusammensetzung gemäss vorhergehender Beschreibung;
ii) Applikation der Zusammensetzung in flüssigem Zustand auf das abzudichtende Substrat;
iii) Aushärtung der applizierten Zusammensetzung mittels Feuchtigkeit zur Bildung einer Folie.

Bei der Applikation der erfindungsgemässen Zusammensetzung wird diese insbesondere mit Hilfe einer Rolle, eines Pinsels, einer Spachtel, einer Walze, einer Rakel, eines Gummischiebers oder mittels Spritzgerät, insbesondere mittels Airless-Spritzgerät, auf das Substrat aufgetragen.

Als Substrate eignen sich dabei insbesondere solche, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff und Lack. Weiterhin geeignete Substrate sind beispielsweise Isoliermaterialen wie sie auf Dächern oftmals eingesetzt werden, insbesondere Glaswolle, Gesteinswolle, Styropor, Bitumenöse Materialien, PVC- oder SPO-Membranen (SPO: flexible Polyolefine).

Dabei kann die Zusammensetzung einschichtig oder mehrschichtig aufgetragen werden. Insbesondere wird die Zusammensetzung mehrschichtig aufgetragen. Wird die Zusammensetzung mehrschichtig aufgetragen, kann das Auftragen der zweiten Schichten unmittelbar nach dem Auftragen der ersten Schicht oder erst nach teilweiser oder vollständiger Aushärtung der ersten Schicht erfolgen. Dasselbe gilt auch für allfällige weitere Schichten.

Beim Verfahren zur Herstellung einer Folie kann weiterhin auf und/oder unter einer Schicht der Zusammensetzung und/oder zwischen Schichten der Zusammensetzung bei mehrschichtiger Applikation zusätzlich ein flächiger Werkstoff eingesetzt werden.

Dieser flächige Werkstoff kann dabei selbst eine Folie, beispielsweise aus einem Kunststoff wie PVC oder dergleichen sein. Weiterhin kann der flächige Werkstoff ein Faserwerkstoff sein, wie beispielsweise solche aus hochfesten Fasern wie Glasfasern, Kohlefasern, Metallfasern und Keramikfasern, oder ein Faserwerkstoff aus Polymerfasern wie zum Beispiel aus textilen Fasern. Bevorzugt wird als Faserwerkstoff ein Vlies eingesetzt.

Weiterhin betrifft die Erfindung eine Folie, erhältlich aus einem vorhergehend beschriebenen Verfahren durch die Reaktion erfindungsgemässen Zusammensetzung mit Wasser, insbesondere in Form von Luftfeuchtigkeit.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Viskosität** wurde in Anlehnung an DIN 53018 bei einer Temperatur von 20 °C und Scherraten von 10 s⁻¹ und 100 s⁻¹ bestimmt. Zusammensetzungen, welche Viskositäten von < 500 mPa·s oder von > 20'000 mPa·s aufweisen, gelten zur Herstellung von Flüssigfolien als ungeeignet.

Die **Zugfestigkeit** und die **Bruchdehnung** wurden nach DIN EN 53504 (Zuggeschwindigkeit: 100 mm/min) an während 7 Tagen bei 23 °C (Raumtemperatur, "RT") und 50% relativer Luftfeuchtigkeit ausgehärteten Filmen mit einer Schichtdicke von 1 mm bestimmt.

Die **Shore A-Härte** wurde bestimmt nach DIN 53505.

Die **Brandeigenschaften** wurden bestimmt, indem ein Prüfkörper mit einer Grösse von 15 x 40 x 1 mm in einem Blechdeckel einer Bunsenbrennerflamme jeweils für 10 Sekunden ausgesetzt wurde. Prüfkörper, die nach einer Beflammung nicht selbst brannten, wurden für weitere 10 Sekunden der Bunsenbrennerflamme ausgesetzt. Der Versuch wurde fortgeführt, bis die Probe ohne Bunsenbrennerbeflammung weiter brannte, maximal jedoch fünf Mal. Zwischen den Beflammungen wurden die Proben für jeweils 10 Sekunden von der Flamme genommen und an der Luft belassen. Zur Auswertung wurden die Anzahl Beflammungszyklen bis zur Entflammung bestimmt. Des Weiteren wurde das Brandverhalten qualitativ bestimmt. Die Beurteilung der Testergebnisse erfolgte folgendermassen:

| | |
|---|---|
| Negativ ("-"): | - Probe brennt nach zwei Zyklen weiter; oder |
| | - Probe ist nicht selbstverlöschend, d.h. sie brennt aus. |
| Positiv ("+"): | - Probe brennt frühestens nach drei Zyklen; und |
| | - Probe ist selbstverlöschend. |
| Sehr Positiv ("++"): | - Probe brennt nicht oder erst nach fünf Zyklen; und |
| | - Probe ist selbstverlöschend. |

Zusammensetzungen, welche als negativ beurteilt wurden, gelten zur Herstellung von Flüssigfolien als nicht bevorzugt.

### Herstellung des silanfunktionellen Polyurethanpolymers P1

Unter Stickstoffatmosphäre wurden 1000 g Polyol Acclaim^{®} 12200 (Bayer MaterialScience AG, Deutschland; low monol Polyoxypropylendiol; OH-Zahl 11.0 mg KOH/g; Wassergehalt ca. 0.02 Gew.-%), 45.88 g Isophorondiisocyanat (IPDI; Vestanat^{®} IPDI, Evonik Degussa GmbH, Deutschland), 122 g 2,2,4-Trimethyl-1,3-pentandioldiisobutyrat (Eastman TXIB, Eastman Chemical Company, USA) und 0.14 g Di-*n*-butyl-zinndilaurat (Metatin^{®} K 712, Acima AG, Schweiz) unter stetigem Rühren auf 90 °C aufgeheizt und auf dieser Temperatur belassen. Nach einer Stunde Reaktionszeit wurde mittels Titration ein Gehalt an freien Isocyanatgruppen von 0.7 Gew.-% erreicht. Anschliessend wurden 66.27 g N-(3-Trimethoxysilyl-propyl)-amino-bernsteinsäure-diethylester dem Reaktionsgemisch beigefügt und für weitere 2 bis 3 Stunden bei 90 °C weitergerührt, bis kein freies Isocyanat mehr mittels IR-Spektroskopie (2275 - 2230 cm⁻¹) mehr nachzuweisen war. Das Produkt wurde auf Raumtemperatur (23 °C) abgekühlt und unter Ausschluss von Feuchtigkeit aufbewahrt (theoretischer Polymergehalt = 90.0%).

N-(3-Trimethoxysilyl-propyl)-amino-bernsteinsäure-diethylester wurde wie folgt hergestellt: 51.0 g 3-Aminopropyl-trimethoxysilan (Silquest^{®} A-1110, Momentive Performance Materials Inc., USA) wurden vorgelegt. Unter Rühren wurden bei Raumtemperatur langsam 49.0 g Maleinsäure-diethylester (Fluka Chemie GmbH, Schweiz) zugegeben und die Mischung während 2 Stunden bei Raumtemperatur gerührt.

### Herstellung der Beschichtungsformulierungen

Gemäss den in der Tabelle 1 angegebenen Gewichtsanteilen wurden das silanfunktionelle Polyurethanpolymer **P1,** Tris(2-ethylhexyl)phosphate (Disflamoll^{®} TOF), 2,2,4-Trimethyl-1,3-pentandioldiisobutyrat und Trimethoxyvinylsilan (Silquest^{®} A-171, Momentive Performance Materials Inc., USA) unter Rühren in ein 1 I Metallgefäss gegeben. Dann wurde das Aluminiumhydroxid (ATH; Apyral^{®} 16, Nabaltec AG, Deutschland) eindispergiert, bis die Temperatur auf 50 °C angestiegen war. Anschliessend wurden 3-(2-Aminoethyl)aminopropyltrimethoxysilan (Silquest^{®} A-1120, Momentive Performance Materials Inc., USA) und Di-*n*-butyl-zinndilaurat (DBTL, Metatin^{®} K 712, Acima AG, Schweiz) zugegeben. Anschliessend wurde die Mischung für 5 Minuten unter Vakuum gerührt. Das fertige Produkt wurde unter Ausschluss von Feuchtigkeit aufbewahrt.

### Herstellung der Prüfkörper

In eine 23 x 30 cm grossen Form wurden jeweils 100 g der Beschichtungsformulierung gegeben und bei 23 °C und 50% relativer Luftfeuchtigkeit während 7 Tagen ausgehärtet.

**Tabelle 1 Zusammensetzungen 1 bis 3 und Referenzbeispiele Ref1 bis Ref5 sowie Resultate; n.b.: nicht bestimmbar.**

| | ***1*** | ***2*** | ***3*** | ***Ref1*** | ***Ref2*** | ***Ref3*** | ***Ref4*** | ***Ref5*** |
|---|---|---|---|---|---|---|---|---|
| **P1** | 28 | 28 | 25 | 37.4 | 37.5 | 37.4 | 28 | 28 |
| Disflamoll^{®} TOF | 10 | 10 | 25.54 | 10 | | | 10 | 10 |
| TXIB | 9.9 | 9.9 | | | 9.9 | | 9.9 | 9.9 |
| Silquest^{®} A-171 | 1.8 | 1.8 | 1.8 | 1.8 | 1.8 | 1.8 | 1.8 | 1.8 |
| Apyral^{®} 16 | 43.34 | 48.64 | 41 | 43.34 | 43.34 | 53.34 | | 21 |
| Kreide | 5.3 | | | 5.3 | 5.3 | 5.3 | 47.64 | 27.64 |
| Silquest^{®} A-1120 | 1.6 | 1.6 | 1.6 | 2.1 | 2.1 | 2.1 | 1.6 | 1.6 |
| DBTL | 0.06 | 0.06 | 0.06 | 0.06 | 0.06 | 0.06 | 0.06 | 0.06 |
| | | | | | | | | |
| Viskosität [Pa·s] Scherrate 10 s⁻¹ | 13 | 12 | 6 | 43 | 46 | 265 | 76 | 33 |
| Viskosität [Pa·s] Scherrate 100 s⁻¹ | 11 | 11 | 5 | 36 | 38 | n.b. | 13 | 16 |
| Zugfestigkeit [MPa] | 2.3 | 3.3 | 2.6 | 3.4 | 3.8 | 5.7 | 3.1 | 3.2 |
| Bruchdehnung[%] | 111 | 143 | 155 | 114 | 120 | 94 | 196 | 161 |
| Shore A | 46 | 40 | 31 | 50 | 53 | 70 | 50 | 41 |
| Brandeigenschaften | + | + | ++ | + | - | + | - | - |

## Patentansprüche

1. Zusammensetzung umfassend
a) mindestens ein silanfunktionelles Polymer **P**; und
b) 20 bis 60 Gew.-% Aluminiumhydroxid oder Magnesiumhydroxid oder deren Mischung;
**dadurch gekennzeichnet, dass** die Zusammensetzung eine Viskosität von 500 bis 20'000 mPa·s gemessen nach DIN 53018 bei einer Temperatur von 20 °C aufweist.

2. Zusammensetzung gemäss Anspruch 1, **dadurch gekennzeichnet, dass** die Zusammensetzung zusätzlich mindestens eine Phosphorverbindung der Formel (I) enthält 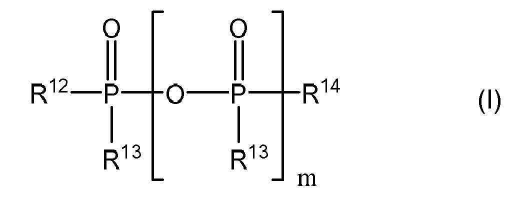 wobei entweder
der Rest R¹² für einen Rest der Formel -OR¹⁵ steht;
der Rest R¹⁵ für einen linearen oder verzweigten, einwertigen Kohlenwasserstoffrest mit 1 bis 18 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist;
der Reste R¹³ für ein Wasserstoffatom oder für einen Rest R¹⁴ steht;
der Rest R¹⁴ für einen Rest der Formel -OR¹⁶ steht;
der Rest R¹⁶ für ein Wasserstoffatom oder für einen linearen oder verzweigten, einwertigen Kohlenwasserstoffrest mit 1 bis 18 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist; und
der Index m für einen Wert von 0, 1 oder 2 steht;
oder wobei
alle Reste R¹², R¹³ und R¹⁴ für Reste der Formel -O⁻ NH₄⁺ stehen; und der Index m für einen Wert von 0 bis 1'000 steht.

3. Zusammensetzung gemäss Anspruch 2, **dadurch gekennzeichnet, dass** die Reste R¹², R¹³ und R¹⁴ jeweils für lineare oder verzweigte, einwertige Kohlenwasserstoffreste mit 1 bis 18, insbesondere mit 4 bis 16, bevorzugt mit 6 bis 12, C-Atomen stehen und m für einen Wert von 0 steht.

4. Zusammensetzung gemäss einem der Ansprüche 2 oder 3, **dadurch gekennzeichnet, dass** der Anteil an Phosphorverbindung der Formel (I) 5 bis 50 Gew.-%, insbesondere 5 bis 30 Gew.-%, bevorzugt 7 bis 15 Gew.-%, der gesamten Zusammensetzung beträgt.

5. Zusammensetzung gemäss einem der vorhergehenden Ansprüche, **dadurch gekennzeichnet, dass** die Zusammensetzung zusätzlich mindestens ein Organosilan, dessen organischer Rest mindestens eine funktionelle Gruppe aufweist, insbesondere ein aminofunktionelles Organosilan, enthält.

6. Zusammensetzung gemäss einem der vorhergehenden Ansprüche, **dadurch gekennzeichnet, dass** die Zusammensetzung eine Viskosität von 2'000 bis 15'000 mPa·s, bevorzugt von 4'000 bis 10'000 mPa·s, gemessen nach DIN 53018 bei einer Temperatur von 20 °C aufweist.

7. Zusammensetzung gemäss einem der vorhergehenden Ansprüche, **dadurch gekennzeichnet, dass** das silanfunktionelle Polymer **P** Endgruppen der Formel (II) aufweist 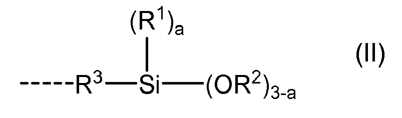 wobei
der Rest R¹ für einen linearen oder verzweigten, einwertigen Kohlenwasserstoffrest mit 1 bis 8 C-Atomen, insbesondere für eine Methyl- oder für eine Ethylgruppe, steht;
der Rest R² für einen Acylrest oder für einen linearen oder verzweigten, einwertigen Kohlenwasserstoffrest mit 1 bis 5 C-Atomen, insbesondere für eine Methyl- oder für eine Ethyl- oder für eine Isopropylgruppe, steht;
der Rest R³ für einen linearen oder verzweigten, zweiwertigen Kohlenwasserstoffrest mit 1 bis 12 C-Atomen steht, welcher gegebenenfalls cyclische und/oder aromatischen Anteile, und gegebenenfalls ein oder mehrere Heteroatome, insbesondere ein oder mehrere Stickstoffatome, aufweist; und
a für einen Wert von 0 oder 1 oder 2, insbesondere für 0, steht.

8. Verwendung einer Zusammensetzung gemäss einem der Ansprüche 1 bis 7 als flüssig applizierbare Folie.

9. Verwendung gemäss Anspruch 8 zur Abdichtung von Bauwerken.

10. Verfahren zur Herstellung einer Folie zur Abdichtung eines Substrats umfassend die Schritte
i) Bereitstellen einer Zusammensetzung gemäss einem der Ansprüche 1 bis 7;
ii) Applikation der Zusammensetzung in flüssigem Zustand auf das abzudichtende Substrat;
iii) Aushärtung der applizierten Zusammensetzung mittels Feuchtigkeit zur Bildung einer Folie.

11. Verfahren gemäss Anspruch 10, **dadurch gekennzeichnet, dass** die Zusammensetzung mit Hilfe einer Rolle, eines Pinsels, einer Spachtel, einer Walze, einer Rakel, eines Gummischiebers oder mittels Spritzgerät, insbesondere mittels Airless-Spritzgerät, auf das Substrat aufgetragen wird.

12. Verfahren gemäss einem der Ansprüche 10 oder 11, **dadurch gekennzeichnet, dass** die Zusammensetzung mehrschichtig aufgetragen wird.

13. Verfahren gemäss einem der Ansprüche 10 bis 12, **dadurch gekennzeichnet, dass** auf und/oder unter einer Schicht der Zusammensetzung und/oder zwischen Schichten der Zusammensetzung bei mehrschichtiger Applikation zusätzlich ein flächiger Werkstoff, insbesondere ein Faserwerkstoff, bevorzugt ein Vlies eingesetzt wird.

14. Folie, erhältlich aus einem Verfahren gemäss einem der Ansprüche 10 bis 13.
